# EUROPÄISCHE PATENTSCHRIFT

(11) **EP 4 471 991 B1**
(45) Veröffentlichungstag und Bekanntmachung des Hinweises auf die Patenterteilung: **09.09.2026**
(21) Anmeldenummer: 24189459.1
(22) Anmeldetag: 15.03.2022
(51) Int. Cl.: H01R 4/48, H01R 11/05, H02B 1/00, H02G 5/00, H01R 25/16, H02G 13/00

(54) **POTENTIALAUSGLEICHSSYSTEM UND BAUKASTENSYSTEM**
POTENTIAL BALANCING SYSTEM AND MODULAR SYSTEM
SYSTÈME DE COMPENSATION DE POTENTIEL ET SYSTÈME MODULAIRE

(30) Priorität: 17.03.2021 DE 102021106566
(43) Veröffentlichungstag der Anmeldung: 04.12.2024
(62) Dokumentnummer(n) der früheren Anmeldung(en) nach Art. 76 EPÜ: 22162225.1 / 4 060 817
(73) Patentinhaber: DEHN SE, 92318 Neumarkt i.d. OPf. (DE)
(72) Erfinder: Rother, Claudia, 92318 Neumarkt i.d.OPf. (DE); Seger, Siegfried, 92318 Neumarkt i.d.OPf. (DE); Wildfeuer, Sabine, 92318 Neumarkt i.d.OPf. (DE); Hannig, Martin, 92318 Neumarkt i.d.OPf. (DE)
(74) Vertreter: Prinz & Partner mbB

(56) Entgegenhaltungen:
- EP-A1- 2 136 437
- CN-A- 1 450 688
- DE-U1- 20 119 510
- US-A1- 2012 264 327

## Beschreibung

Die Erfindung betrifft ein Potentialausgleichssystem und ein Baukastensystem mit einem solchen Potentialausgleichssystem.

Potentialausgleichssysteme werden für den Schutz gegen elektrische Schläge und zum Funktionspotentialausgleich vorgesehen, beispielsweise im Bereich des Blitzschutzes. Die Potentialausgleichssysteme sind üblicherweise Bestandteil der jeweiligen Elektroinstallation, insbesondere Bestandteil des inneren und äußeren Blitzschutzes eines Gebäudes, und weisen eine Potentialausgleichsschiene auf, an die mehrere Leiter angeschlossen sind. Dabei sind die Leiter an der Potentialausgleichsschiene mechanisch fixiert und elektrisch leitend mit der Potentialausgleichsschiene verbunden.

Um die Leiter an der Potentialausgleichsschiene mechanisch zu befestigen, sind aus dem Stand der Technik Schraubklemmanschlüsse bekannt. Dabei wird ein Endbereich des Leiters über eine Schraube gegen die Potentialausgleichsschiene geklemmt. Es ist also ein entsprechender Schraubenschlüssel bzw. allgemein Werkzeug nötig, um die Leiter an der Potentialausgleichsschiene zu befestigen und wieder von der Potentialausgleichsschiene zu lösen.

Demnach ist ein hoher Montageaufwand notwendig, um die Leiter an der Potentialausgleichsschiene zu befestigen.

Die US 2012 / 0 264 327 A1 beschreibt eine Erdungsschiene und einen auf dieser angeordneten Leiterblock, der mit der Erdungsschiene elektrisch verbunden ist. Die Erdungsschiene kann über eine Klammer an einem Grundträger befestigt sein. Ein Leiter lässt sich mittels einer Madenschraube an dem Leiterblock befestigen.

Die EP 2 136 437 A1 beschreibt ebenfalls eine Klemmeinheit, an der Leiter mittels Schrauben fixiert werden können.

Die CN 1 450 688 A offenbart verschiedene Klemmeinheiten, die auf eine Schiene aufgesteckt werden können.

Die DE 201 19 510 U1 offenbart eine Federklemme.

Die Aufgabe der Erfindung ist es daher, die Befestigung der Leiter an der Potentialausgleichsschiene zu vereinfachen.

Die Aufgabe wird erfindungsgemäß gelöst durch ein Potentialausgleichssystem für den Schutz gegen elektrische Schläge und zum Funktionspotentialausgleich im Bereich des Blitzschutzes, das eine elektrisch leitfähige Potentialausgleichsschiene und wenigstens eine auf der Potentialausgleichsschiene angeordnete und elektrisch mit der Potentialausgleichsschiene verbundene Klemmeinheit umfasst. Die Klemmeinheit ist dazu ausgebildet, einen Leiter mit der Potentialausgleichsschiene elektrisch zu verbinden, und hat eine Klemmvorrichtung, die zwischen einer Klemmposition und einer Freigabeposition bewegbar ist. In der Klemmposition ist der Leiter werkzeugfrei an der Klemmeinheit fixierbar und elektrisch mit der Klemmeinheit verbindbar, und in der Freigabeposition ist der Leiter relativ zur Klemmeinheit bewegbar. Die Klemmeinheit ist eine Einsteckklemmeinheit und die Klemmvorrichtung ist in die Klemmposition vorgespannt, sodass der Leiter durch Einstecken in die Klemmeinheit mechanisch fixierbar ist. Die Klemmeinheit ist direkt an der Potentialausgleichsschiene befestigt. In der Potentialausgleichsschiene sind mehrere Befestigungsöffnungen zur Befestigung zumindest eines Kabelschuhanschlusses und eines Kontaktsystems für einen Flachleiter oder einen Rundleiter ausgebildet, die in Längsrichtung entlang der Potentialausgleichsschiene verteilt sind.

Der Grundgedanke der Erfindung ist es, den Leiter nicht über Schrauben oder ähnlichen Befestigungsmittel an der Potentialausgleichsschiene zu befestigen, sondern über die Klemmeinheit. In einer ersten Stellung (Klemmposition) befestigt die Klemmeinheit den Leiter mechanisch an der Potentialausgleichsschiene und verbindet den Leiter gleichzeitig elektrisch mit der Potentialausgleichsschiene. Dabei kann der Leiter in der Klemmposition werkzeugfrei an der Klemmeinheit befestigt werden. Beim Einstecken des Leiters interagiert dieser mit der Einsteckklemmeinheit derart, dass der Leiter direkt und automatisch geklemmt wird. In einer zweiten Stellung (Freigabeposition) ist der Leiter nicht mehr mechanisch an der Potentialausgleichsschiene befestigt und kann demnach relativ zur Potentialausgleichsschiene und zur Klemmeinheit bewegt werden, beispielsweise aus der Klemmeinheit herausgezogen oder in die Klemmeinheit eingesteckt werden. Auf diese Weise ist also eine einfache mechanische Fixierung und elektrische Anbindung des Leiters an der Potentialausgleichsschiene möglich. Mit anderen Worten vereinfacht das Potentialausgleichssystem die Befestigung eines Leiters an der Potentialausgleichsschiene.

Es ist auch denkbar, dass die Klemmeinheit werkzeugfrei von der Klemmposition in die Freigabeposition bewegbar ist. Auf diese Weise ist weder zum Lösen noch zum Befestigen ein Werkzeug notwendig.

Dabei wendet die Klemmeinheit in der Klemmposition auf den Leiter eine Klemmkraft auf, über die der Leiter mechanisch am Potentialausgleichssystem fixiert und gehalten wird, insbesondere geklemmt ist.

Beispielsweise liegt der Leiter unmittelbar auf der Potentialausgleichsschiene auf und über die Klemmkraft wird der Leiter gegen die Potentialausgleichsschiene gepresst. In diesem Fall ist ein direkter elektrischer Kontakt zwischen der Potentialausgleichsschiene und dem Leiter ausgebildet.

Alternativ kann die Klemmeinheit auch eine entsprechende Aufnahme für den Leiter aufweisen, in die der Leiter eingesteckt wird und innerhalb der der Leiter mechanisch fixiert wird. Dabei wird der elektrische Kontakt zwischen Potentialausgleichsschiene und Leiter über die Klemmeinheit ausgebildet. Hierzu kann die Klemmeinheit eine elektrisch leitfähige Basis aufweisen, auf der der Leiter aufliegt und an die der Leiter in der Klemmposition gedrückt ist. Die elektrisch leitfähige Basis kann mit der Potentialausgleichsschiene elektrisch leitend gekoppelt sein, insbesondere direkt auf der Potentialausgleichsschiene aufliegen.

Die Klemmeinheit kann also zumindest teilweise elektrisch leitend ausgebildet sein, insbesondere ihre Basis.

Mit anderen Worten ist der Leiter zumindest zwischen dem Bereich der Aufnahme des Leiters und einem Kontaktbereich, in dem die Klemmeinheit elektrisch mit der Potentialausgleichsschiene verbunden ist, elektrisch leitfähig. Der Kontaktbereich kann durch die Basis gebildet sein.

Der Kontaktbereich kann auch gleichzeitig der Befestigungsbereich der Klemmeinheit sein, also derjenige Bereich der Klemmeinheit, über den die Klemmeinheit an der Potentialausgleichsschiene befestigt ist.

Beispielsweise ist die Klemmeinheit zumindest teilweise aus einem Metall mit einer guten Leitfähigkeit, wie Kupfer.

Der Leiter kann sowohl als Rundleiter als auch als Flachleiter ausgebildet sein.

Mit anderen Worten kann der Leiter im Querschnitt kreisförmig oder rechteckig sein.

Die direkte Befestigung der Klemmeinheit an der Potentialausgleichsschiene ermöglicht eine kompakte Ausgestaltung, da keine Zwischenelemente nötig sind, wodurch die Montage weiter vereinfacht wird. Beispielsweise lässt sich die Klemmeinheit auf die Potentialausgleichsschiene aufstecken. Grundsätzlich können viele Klemmeinheiten auf einer Potentialausgleichsschiene befestigt werden.

Auch kann die Klemmeinheit direkt an die Potentialausgleichsschiene angelötet oder angenietet sein.

Ein Aspekt der Erfindung sieht vor, dass die Klemmeinheit auf der Potentialausgleichsschiene frei positionierbar ist. Dabei ist die Klemmeinheit über mehrere Befestigungsöffnungen an der Potentialausgleichsschiene mechanisch fixierbar und elektrisch anbindbar. Auf diese Weise wird eine hohe Flexibilität bei der Anordnung der Klemmeinheit auf der Potentialausgleichsschiene gewährleistet. Die Klemmeinheit kann so an der gewünschten Position auf der Potentialausgleichsschiene angeordnet werden, sodass die Position der Klemmeinheit an die örtlichen Gegebenheiten angepasst werden kann.

Auch kann die Orientierung der Klemmeinheit auf der Potentialausgleichsschiene frei gewählt werden, sodass ein Leiter, je nach Orientierung der Klemmeinheit in Bezug auf die Potentialausgleichsschiene, grundsätzlich von beiden Seiten zur Potentialausgleichsschiene geführt werden kann. Auch hierdurch ergibt sich eine entsprechend hohe Flexibilität.

Die Klemmeinheit kann auf die Potentialausgleichsschiene aufgesteckt, an der an der Potentialausgleichsschiene angelötet oder an der Potentialausgleichsschiene angenietet sein.

Beispielsweise umfasst die Klemmeinheit ein mehrteiliges Gehäuse, von dem Kontaktstifte an einer Unterseite hervorragen, die im montierten Zustand der Potentialausgleichsschiene zugeordnet sind.

Gemäß einem Aspekt ist die Klemmeinheit über die Kontaktstifte mit der Potentialausgleichsschiene elektrisch leitend verbunden.

In einer Ausgestaltung der Erfindung weist die Klemmvorrichtung eine Federklemme auf, die in die Klemmposition oder in die Freigabeposition vorgespannt ist. Dabei kann die Klemmeinheit ein Betätigungselement haben, über das die Klemmvorrichtung in Richtung der Freigabeposition bzw. in Richtung der Klemmposition beaufschlagbar ist.

Beispielsweise ist das Betätigungselement ein Druckknopf oder ein Hebel.

Die Federklemme kann grundsätzlich zur Aufnahme von eindrähtigen Leitern ausgebildet sein, beispielsweise mit einem Leiterquerschnitt von 0,2 bis 4 mm².

Alternativ kann die Federklemme auch derart ausgebildet sein, dass sie ein-, mehr- oder feindrähtige Leiter aufnimmt, die beispielsweise einen Leiterquerschnitt von 0,08 bis 35 mm² haben.

Beispielsweise interagiert der Leiter mit einem Freigabeelement an der Einsteckklemmeinheit, sodass ein Klemmteil freigegeben wird, das mechanisch vorgespannt gewesen ist. Über das Klemmteil ist der Leiter in der Klemmposition innerhalb der Einsteckklemmeinheit klemmend gehalten.

Der Leiter lässt sich also dadurch werkzeugfrei fixieren, dass der Leiter werkzeugfrei in die Einsteckklemmeinheit eingesteckt wird, wobei das mechanische vorgespannte Klemmteil den Leiter klemmt.

Zum Lösen des geklemmten Leiters kann ein Werkzeug benötigt werden, über das das Klemmteil in seine mechanisch vorgespannte Ausgangsposition zurückgestellt werden muss, um den Leiter entfernen zu können. Alternativ kann das Klemmteil auch manuell mittels eines Hebels, Druckknopfs oder ähnliches, beispielweise über das Freigabeelement oder das Betätigungselement, in seine Ausgangsstellung überführt werden, in der das Klemmteil mechanisch vorgespannt ist.

Insbesondere ist die Einsteckklemmeinheit ausgebildet, Leiter mit einem Leiterquerschnitt von 0,5 bis 16 mm² aufzunehmen, die direkt in die Einsteckklemmeinheit eingesteckt werden können.

Beispielsweise ist wenigstens ein Einführungselement vorgesehen, das den zumindest einen Leiter beim Einstecken in die Klemmvorrichtung führt, insbesondere beim Einstecken in die Einsteckklemmeinheit. Das Einführungselement kann ein Einführungstrichter sein, durch den der zumindest eine Leiter geführt ist. Das Einführungselement kann, insbesondere an seinem weiteren Ende, an den Isolationsdurchmesser des zumindest einen Leiters angepasst sein, um eine entsprechend gute Führung zu gewährleisten.

Um mehrere Leiter gleichzeitig aufnehmen zu können, kann die Klemmeinheit eine weitere Klemmvorrichtung aufweist, über die ein weiterer Leiter an der Klemmeinheit befestigbar ist. Die mehreren Klemmvorrichtungen können unabhängig voneinander betätigt und mit Leitern bestückt werden. Die Klemmvorrichtungen sind beispielsweise benachbart zueinander angeordnet, insbesondere in einem gemeinsamen Gehäuse der Klemmeinheit.

Beispielsweise weist die Klemmeinheit insgesamt vier Klemmvorrichtungen auf und kann entsprechend insgesamt vier Leiter aufnehmen.

Mit anderen Worten kann die Klemmeinheit 4-polig ausgebildet sein.

Ein weiterer Aspekt der Erfindung sieht vor, dass das Potentialausgleichssystem zumindest eine weitere Klemmeinheit aufweist. Eine der wenigstens zwei Klemmeinheiten ist dazu ausgebildet, einen Leiter mit einem Leiterquerschnitt aus einem ersten Leiterquerschnittsbereich aufzunehmen, und die andere der wenigstens zwei Klemmeinheiten ist dazu ausgebildet, einen Leiter mit einem Leiterquerschnitt aus einem zweiten Leiterquerschnittsbereich aufzunehmen. Dabei sind der erste Leiterquerschnittsbereich und der zweite Leiterquerschnittsbereich unterschiedlich. Auf diese Weise können unterschiedliche Leiter an der Potentialausgleichsschiene mechanisch fixiert und elektrisch angeschlossen werden.

Der erste Leiterquerschnittsbereich und der zweite Leiterquerschnittsbereich können sich teilweise überlappen.

Mit anderen Worten können die Anfangs- und/oder Endwerte des ersten Leiterquerschnittsbereichs und des zweiten Leiterquerschnittsbereichs verschieden sein. Typischerweise werden sich die Anfangswerte und die Endwerte der durch die Klemmeinheiten aufnehmbaren Leiterquerschnitte voneinander unterscheiden.

Beispielsweise ist die eine der wenigstens zwei Klemmeinheiten dazu ausgebildet, Leiter mit einem Leiterquerschnitt aus dem Leiterquerschnittsbereich von 0,2 bis 4 mm² aufzunehmen, und die andere der wenigstens zwei Klemmeinheiten ist dazu ausgebildet, Leiter mit einem Leiterquerschnitt aus dem Leiterquerschnittsbereich von 2 bis 8 mm² aufzunehmen. In diesem Fall erstreckt sich der erste Leiterquerschnittsbereich von 0,2 bis 4 mm² und der zweite Leiterquerschnittsbereich von 2 bis 8 mm².

Es kann vorgesehen sein, dass sich der erste und zweite Leiterquerschnittsbereich maximal bis 16 mm² erstreckt.

Beispielsweise erstreckt sich der erste Leiterquerschnittsbereich von 4 bis 16 mm² und der zweite Leiterquerschnittsbereich von 1 bis 6 mm².

Um die verschiedenen Klemmeinheiten des Potentialausgleichssystems zu kennzeichnen, können die Klemmeinheiten verschiedene Gestaltungen aufweisen. Somit kann ein Benutzer der Potentialausgleichsschiene schneller entscheiden, welcher Leiter in der welcher Klemmeinheit befestigt werden sollte.

Beispielsweise sind die Gehäuse der wenigstens zwei Klemmeinheiten verschiedenfarbig. Auf diese Weise erkennt ein Benutzer der Potentialausgleichsschiene sofort, welche Klemmeinheit für den zu kontaktierenden Leiter am besten geeignet ist.

Alternativ oder zusätzlich kann auf den Gehäusen der wenigstens zwei Klemmeinheiten auch eine entsprechende Markierung vorhanden sein, wie ein Aufdruck des ersten bzw. zweiten Leiterquerschnittsbereichs, der Anfangswerte des ersten bzw. zweiten Leiterquerschnittsbereichs oder der Endwerte des ersten bzw. zweiten Leiterquerschnittsbereichs.

Um eine ortsfeste Installation des Potentialausgleichssystems zu ermöglichen, können an der Potentialausgleichsschiene endseitig elektrisch nicht leitfähige Haltevorrichtungen angeordnet sein, über die das Potentialausgleichssystem an einem Gegenstand befestigbar ist.

Beispielsweise ist die Potentialausgleichsschiene in die Haltevorrichtungen eingesteckt und die Potentialausgleichsschiene kann über die Haltevorrichtungen an einer Wand befestigt werden.

Dabei kann das Potentialausgleichssystem auch eine Abdeckung aufweisen. Die Abdeckung schützt das Potentialausgleichssystem vor Berührungen durch Unbefugte, Staub und Flüssigkeiten.

Die Aufgabe der Erfindung wird ferner gelöst durch ein Baukastensystem, das ein vorhergehend beschriebenes Potentialausgleichssystem, und zumindest einen Kabelschuhanschluss und/oder zumindest ein Kontaktsystem für einen Flachleiter oder einen Rundleiter aufweist. Dabei ist wahlweise die Klemmeinheit, der zumindest eine Kabelschuhanschluss und/oder das Kontaktsystem an der Potentialausgleichsschiene befestigt. Es ergeben sich die bereits bezüglich des Potentialausgleichssystems ausgeführten Vorteile und Eigenschaften, die gleichermaßen für das Baukastensystem gelten und umgekehrt.

Durch das Baukastensystem können eine Vielzahl an verschiedenen Leitern an der Potentialausgleichsschiene fixiert werden. Durch die entsprechende Bestückung der Potentialausgleichsschiene kann das Baukastensystem also an den entsprechenden Anwendungsfall und die Gegebenheiten vor Ort angepasst werden. Somit stellt das Baukastensystem praktisch für jeden Anwendungsfall eine passende Lösung bereit.

Beispielsweise werden die Klemmeinheit, der zumindest eine Kabelschuhanschluss und das Kontaktsystem über die Befestigungsöffnungen an der Potentialausgleichsschiene befestigt.

Alternativ kann die Klemmeinheit auch fest auf der Potentialausgleichsschiene befestigt sein.

Das Kontaktsystem kann einen elektrisch leitfähigen Kontaktkörper und eine Befestigungsvorrichtung aufweisen. Die Befestigungsvorrichtung ist an der Potentialausgleichsschiene befestigt und dazu ausgebildet ist, den Leiter am Kontaktkörper kraftschlüssig zu fixieren. Dabei weist der Kontaktkörper eine erste Kontaktseite mit einem ersten flächigen Kontaktbereich und eine zweite Kontaktseite mit einem zweiten flächigen Kontaktbereich auf. Die beiden Kontaktseiten sind entgegengesetzt zueinander. Der Kontaktkörper ist über den ersten flächigen Kontaktbereich mit dem Leiter kontaktierbar und kontaktiert über den zweiten flächigen Kontaktbereich die Potentialausgleichsschiene. Durch das Kontaktsystem wird die Flexibilität des Baukastensystems bei der Fixierung von Leitern erhöht.

In einer Ausgestaltung weist die Befestigungsvorrichtung einen Bügel auf, der Befestigungsöffnungen hat, über die der Bügel an der Potentialausgleichsschiene befestigt ist. Damit wird der Leiter am Kontaktkörper und gleichzeitig der Kontaktkörper kraftschlüssig an der Potentialausgleichsschiene befestigt. Der Bügel hat mittig einen Beaufschlagungsbereich, über den der Leiter am ersten Kontaktbereich fixierbar ist.

Beispielsweise ist der Bügel (im Wesentlichen) plattenartig, wobei der Beaufschlagungsbereich durch eine Auswölbung gebildet ist, sodass der Beaufschlagungsbereich in einer anderen Ebene als die Befestigungsöffnungen liegt. Auf diese Weise wird eine einfache und kostengünstige Befestigungsvorrichtung bereitgestellt, die sicherstellt, dass der Leiter sicher fixiert ist.

Der Bügel kann aus einem Metall sein.

Das Kontaktsystem kann ausgebildet, einen Flachleiter elektrisch mit der Potentialausgleichsschiene zu kontaktieren, und einen Adapter für Rundleiter aufweisen. Dabei weist der Adapter eine Aufnahme für den Rundleiter auf, in die der Rundleiter einsetzbar und befestigbar ist. Der Adapter hat einen im Querschnitt rechteckigen Kontaktierungsbereich, der mittels der Befestigungsvorrichtung mit dem Kontaktkörper koppelbar ist. Somit kann das Kontaktsystem grundsätzlich für viele verschiedene Leiter eingesetzt werden, da Flachleiter direkt und Rundleiter mittels des Adapters entsprechend kontaktiert werden können.

Die Aufnahme kann im Querschnitt kreisförmig sein, sodass sich der Rundleiter sicher aufnehmen lässt.

In einer Ausgestaltung hat das Kontaktsystem ein Gehäuse, in dem der Kontaktkörper angeordnet ist, wobei das Gehäuse im Bereich der Kontaktbereiche offen ist, sodass die Kontaktbereiche frei zugänglich sind. Der Kontaktkörper kann im Gehäuse aufgenommen sein, sodass dieser teilweise vom Gehäuse umgeben ist. Dabei ist der Kontaktkörper mittels des Gehäuses auf der Potentialausgleichsschiene positionierbar. Insofern ist das Gehäuse entsprechend der Potentialausgleichsschiene dimensioniert. Durch das Gehäuse wird also das Montieren des Leiters an der Potentialausgleichsschiene vereinfacht. Es wird zunächst der Kontaktkörper über das Gehäuse auf der Potentialausgleichsschiene positioniert und anschließend wird der Leiter auf das Gehäuse, im Bereich der Kontaktflächen aufgelegt und am Gehäuse fixiert.

Innerhalb des Gehäuses kann ein Hohlraum ausgebildet sein, in den der Kontaktkörper aufgenommen bzw. eingesetzt ist, wobei der Kontaktkörper über seinen Randbereich verliersicher und positionsgetreu im Gehäuse gehalten ist.

Der Kontaktkörper wird also an einer vorbestimmten Position relativ zur Potentialausgleichsschiene angeordnet. Somit wird ein guter Kontakt zwischen der Potentialausgleichsschiene und dem Kontaktkörper sichergestellt.

Beispielsweise sind hierfür am Gehäuse Haltemittel vorgesehen, die am Kontaktkörper im Randbereich angreifen und den Kontaktkörper im Gehäuse fixieren.

Es ist denkbar, dass in den Hohlraum zusätzlich ein elektrisch nicht leitfähiger, poröser Einsatz eingelegt ist. Beispielsweise ist der Einsatz aus einem offenporigen Kunststoff.

Das Gehäuse kann mehrteilig ausgebildet sein und ein oberes Gehäuseteil und ein unteres Gehäuseteil aufweisen. Auf diese Weise wird das Einsetzen des Kontaktkörpers in das Gehäuse vereinfacht, da der Kontaktkörper zunächst in eines der beiden Gehäuseteil, insbesondere das untere Gehäuseteil, eingesetzt wird. Anschließend wird das andere Gehäuseteil, insbesondere das obere Gehäuseteil, deckelartig aufgesetzt, sodass der Kontaktkörper im Gehäuse aufgenommen ist.

Dabei kann das Gehäuse nur aus dem oberen und unteren Gehäuseteil bestehen. Dementsprechend weist das Gehäuse einen einfachen Aufbau auf.

Ebenso kann das Gehäuse im Bereich des Hohlraums eine federnde Aufnahme aufweisen, über die der Kontaktkörper, insbesondere verliersicher, im Gehäuse aufgenommen wird.

Am Gehäuse kann eine Positioniervorrichtung ausgebildet sein, über die das Gehäuse auf der Potentialausgleichsschiene positionierbar ist. Somit kann zunächst das Gehäuse mit dem Kontaktkörper an der Potentialausgleichsschiene und anschließend der Flachleiter oder der Rundleiter mit dem Adapter am Gehäuse fixiert werden.

Der Abstand benachbarter Befestigungsöffnungen der Potentialausgleichsschiene kann für alle Befestigungsöffnungen gleich sein und/oder die Befestigungsöffnungen können alle gleich ausgeführt sein.

Beispielsweise weisen alle Befestigungsöffnungen den gleichen Durchmesser auf.

Weitere Merkmale und Vorteile der Erfindung ergeben sich aus der nachfolgenden Beschreibung sowie aus den beigefügten Zeichnungen, auf die im Folgenden Bezug genommen wird. In den Zeichnungen zeigen:
- Figur 1 in einer perspektivischen Ansicht ein erfindungsgemäßes Baukastensystem mit einem erfindungsgemäßen Potentialausgleichssystem gemäß einer ersten Ausführungsform,
- Figur 2 eine perspektivische Detailansicht einer Klemmeinheit des Potentialausgleichssystems der Figur 1,
- Figur 3 eine weitere Ausgestaltung des erfindungsgemäßen Baukastensystems in einer perspektivischen Ansicht,
- Figur 4 ein beispielhaftes Baukastensystem mit einem beispielhaften Potentialausgleichssystem in einer perspektivischen Ansicht,
- Figur 5 eine perspektivische Detailansicht eines Teils des Potentialausgleichssystems der Figur 4,
- Figur 6 eine perspektivische Explosionsansicht des Teils des Potentialausgleichssystems der Figur 5,
- Figuren 7 und 8 perspektivische Schnittansichten einer weiteren Ausgestaltung einer Klemmeinheit in der Freigabeposition und in der Klemmposition eines erfindungsgemäßen Potentialausgleichssystems,
- Figuren 9 und 10 perspektivische Ansichten einer weiteren Ausgestaltung eines erfindungsgemäßen Baukastensystems mit einem erfindungsgemäßen Potentialausgleichssystem,
- Figur 11 eine perspektivische Explosionsansicht eines Kontaktsystems des Baukastensystems der Figur 9,
- Figur 12 eine Längsschnittansicht des Baukastensystems der Figur 9 entlang der Schnitt XII-XII in der Figur 12, und
- Figur 13 einen Adapter des Baukastensystems der Figur 10.

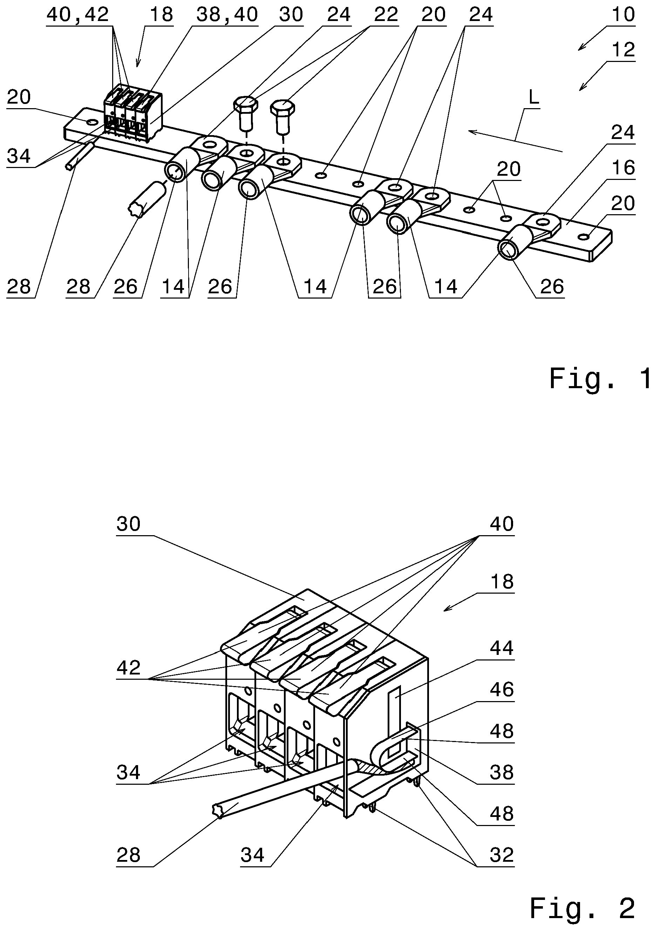

Figur 1 zeigt ein Baukastensystem 10 für die elektrische Anbindung von Leitern.

Das Baukastensystem 10 umfasst ein Potentialausgleichssystem 12 und mehrere Kabelschuhanschlüsse 14.

Das Potentialausgleichssystem 12 hat in der gezeigten Ausführungsform eine elektrisch leitende Potentialausgleichsschiene 16 sowie eine direkt auf der Potentialausgleichsschiene 16 befestigte Klemmeinheit 18.

Bei der Potentialausgleichsschiene 16 handelt es sich um eine Potentialausgleichsschiene 16 aus einem Metall oder einer Metalllegierung, wodurch die elektrische Leitfähigkeit gegeben ist.

In der Potentialausgleichsschiene 16 sind mehrere Befestigungsöffnungen 20 ausgebildet, die in Längsrichtung L entlang der Potentialausgleichsschiene 16 verteilt sind.

In der Ausführungsform der Figur 1 sind alle Befestigungsöffnungen 20 identisch ausgeführt, d.h. die Befestigungsöffnungen 20 weisen alle einen bestimmten Durchmesser und ein Gewinde mit einer bestimmten Steigung auf, beispielsweise ein M10-Innengewinde.

Zusätzlich können die Befestigungsöffnungen 20 auch gleichmäßig entlang der Potentialausgleichsschiene 16 verteilt angeordnet sein, d.h. benachbarte Befestigungsöffnungen 20 weisen den gleichen Abstand in Längsrichtung L zueinander auf.

Hierdurch ist eine entsprechende Flexibilität des Potentialausgleichssystems 12 gewährleistet, da die unterschiedlichen Komponenten zum Anschluss der Leiter an verschiedenen Positionen vorgesehen werden können.

Die Kabelschuhanschlüsse 14 sind über Befestigungsmittel 22, hier Schrauben, in einem flächigen Kontaktbereich 24 an der Potentialausgleichsschiene 16 befestigt und weisen eine Einstecköffnung 26 auf, über die ein Leiter 28 in einem entsprechenden Kabelschuhanschluss 14 befestigt werden kann.

Beispielsweise wird der Leiter 28 mittels Krimpen im entsprechenden Kabelschuhanschluss 14 befestigt, wobei der Leiter 28 zunächst über die Einstecköffnung eingeführt worden ist.

Der Leiter 28 ist dann über den Kabelschuhanschluss 14 im befestigten Zustand über den flächigen Kontaktbereich 24 elektrisch leitend mit der Potentialausgleichsschiene 16 verbunden.

Der flächige Kontaktbereich 24 stellt grundsätzlich sicher, dass keine Luftspalte auftreten, an denen Funken entstehen können.

Die Klemmeinheit 18, die in Figur 2 im Detail gezeigt ist, umfasst ein mehrteiliges Gehäuse 30, von dem Kontaktstifte 32 an einer Unterseite hervorragen, die im montierten Zustand der Potentialausgleichsschiene 16 zugeordnet ist. Über die Kontaktstifte 32 ist die Klemmeinheit 18 mit der Potentialausgleichsschiene 16 elektrisch leitend verbunden.

In jedem Gehäuseteil ist eine Aufnahme 34, eine Klemmvorrichtung 36 und ein leitender Abschnitt 38 ausgebildet. Der leitende Abschnitt 38 kann dabei an einer elektrisch leitfähigen Basis der Klemmvorrichtung 36 ausgebildet sein.

Ferner ist an jedem Gehäuseteil ein der entsprechenden Klemmvorrichtung 36 zugeordnetes Betätigungselement 40 angeordnet.

In der Ausgestaltung der Figuren 1 und 2 sind die Betätigungselemente 40 durch Hebel 42 ausgebildet, wobei die Betätigungselemente 40 jeweils einen Betätigungsabschnitt 44 innerhalb des Gehäuses 30 aufweisen (Figur 2).

Die Betätigungselemente 40 sind von außerhalb des Gehäuses 30 werkzeugfrei betätigbar. Genauer gesagt können sie per Hand in der Position der Figur 2 nach oben bewegt werden und auch per Hand wieder in die Position der Figur 2 zurückbewegt werden.

Durch die Bewegung eines der Betätigungselemente 40 wird die entsprechende Klemmvorrichtung 36 betätigt.

Dabei weist die Klemmvorrichtung 36 eine Federklemme 46 auf, die einen Federarm 48 aufweist, der einen gebogenen Abschnitt hat.

In der Ausgestaltung der Figur 2 ist der Federarm 48 mit einem ersten Ende gehäusefest innerhalb des Gehäuses 30 angeordnet, wobei das zweite Ende des Federarms 48 ein freies Ende ist, das mittels des Betätigungsabschnitts 44 zwischen einer Klemmposition (gezeigt in Figur 2) und einer Freigabeposition bewegbar ist.

In der Klemmposition wirkt der Betätigungsabschnitts 44 auf den Federarm 48 ein, insbesondere das freie Ende, und drückt diesen in Richtung des leitenden Abschnitts 38 der Klemmvorrichtung 36. Dabei wird der Leiter 28, falls dieser in die Aufnahme 34 eingeführt ist, gegen den leitenden Abschnitt 38 gepresst und ist damit elektrisch leitend mit der Potentialausgleichsschiene 16 verbunden sowie mechanisch innerhalb der Aufnahme 34 fixiert.

Der Leiter 28 ist also durch die Klemmvorrichtung 36 mechanisch innerhalb der Klemmeinheit 18 fixiert und über die Kontaktstifte 32 elektrisch leitend mit der Potentialausgleichsschiene 16 verbunden.

Zum Fixieren des Leiters 28 in der Klemmeinheit 18 ist kein zusätzliches Werkzeug notwendig. Der Leiter 28 wird nämlich einfach durch das Absenken des Betätigungselements 40 in der Klemmeinheit 18 mechanisch fixiert, welches über seinen Betätigungsabschnitt 44 auf den Federarm 48 wirkt.

In der Freigabeposition wirkt der Betätigungsabschnitt 44 nicht auf den Federarm 48 ein, insbesondere das freie Ende des Federarms 48, und das freie Ende des Federarms 48 bewegt sich in seine Ausgangsstellung, die aufgrund der Federwirkung gegeben ist. Insofern bewegt sich das freie Ende des Federarms 48 in Richtung des gehäusefesten Endes des Federarms 48 bzw. in Richtung des Betätigungselements 40.

In der Ausführungsform der Figuren 1 und 2 ist die Federklemme 46, also die Klemmvorrichtung 36 in Richtung der Freigabeposition vorgespannt.

Mit anderen Worten ist die Klemmvorrichtung 36 in die Freigabeposition vorgespannt, was bedeutet, dass die Klemmvorrichtung 36 derart vorgespannt ist, dass sie sich bei Betätigung selbsttätig in die Freigabeposition bewegt, nämlich aufgrund der Vorspannung.

Grundsätzlich kann der Federarm 48 somit als Klemmteil bezeichnet werden, da hierüber die Klemmung des eingesteckten Leiters 28 innerhalb der Klemmvorrichtung 36 erfolgt.

In der Freigabeposition der Klemmvorrichtung 36 ist der Leiter 28 nicht innerhalb der Klemmeinheit 18 fixiert und kann entsprechend relativ zur Klemmeinheit 18 bewegt werden, insbesondere kann der Leiter 28 aus der Aufnahme 34 herausgenommen bzw. in die Aufnahme 34 hineingesteckt werden.

Zum Lösen des Leiters 28 ist demnach auch kein Werkzeug notwendig. Durch das Anheben des Betätigungselements 40 wird die Klemmvorrichtung 36 gelöst und der Leiter 28 ist dann bewegbar relativ zur Klemmeinheit 18.

In der Ausführungsform der Figuren 1 und 2 wird die Klemmvorrichtung 36 also werkzeugfrei von der Freigabeposition in die Klemmposition überführt und umgekehrt.

Durch die Klemmeinheit 18 wird ein schnelles mechanisches Fixieren und elektrisches Anbinden des Leiters 28 an der Potentialausgleichsschiene 16 möglich.

Zusätzlich können durch das Baukastensystem 10 viele verschiedene Leiter 28 an der Potentialausgleichsschiene 16 fixiert werden.

Dabei weisen die Leiter 28, die in den Kabelschuhanschlüssen 14 befestigt sind, üblicherweise einen größeren Leiterquerschnitt auf als die Leiter 28, die über die Klemmeinheit 18 an der Potentialausgleichsschiene 16 fixiert sind.

In der Ausführungsform der Figuren 1 und 2 sind die Leiter 28 als Rundleiter dargestellt, also Leiter 28, die einen kreisförmigen Querschnitt aufweisen.

Im Allgemeinen können in der Klemmeinheit 18 natürlich auch Flachleiter befestigt werden, also Leiter 28, die einen rechteckigen Querschnitt aufweisen.

Beispielsweise ist am Rundleiter in einem Endabschnitt eine Adernendhülse durch Krimpen befestigt. Durch das Krimpen könnte der Endabschnitt dann rechteckig verformt sein.

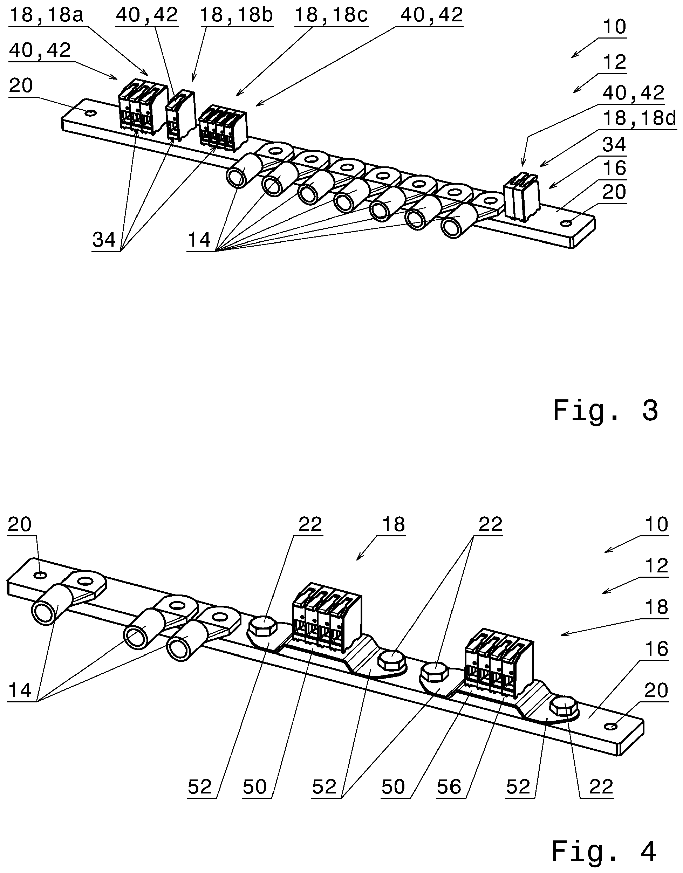

Anhand der Figuren 3 bis 13 werden im Folgenden weitere Ausgestaltungen des Baukastensystems 10 und weitere Ausgestaltungen und Ausführungsformen des Potentialausgleichssystems 12 erläutert, die im Wesentlichen der Ausführungsform der Figuren 1 und 2 entsprechen, sodass im Folgenden lediglich auf die Unterschiede eingegangen wird. Gleiche und funktionsgleiche Bauteile sind mit denselben Bezugszeichen bezeichnet.

In der Ausgestaltung des Potentialausgleichssystems 12 der Figur 3 sind mehrere Klemmeinheiten 18 direkt an der Potentialausgleichsschiene 16 befestigt, nämlich eine erste Klemmeinheit 18a, eine zweite Klemmeinheit 18b, eine dritte Klemmeinheit 18c und eine vierte Klemmeinheit 18d.

Dabei sind Klemmeinheiten 18a bis 18d ausgebildet, Leiter mit Leiterquerschnitten aus verschiedenen Leiterquerschnittsbereichen aufzunehmen.

Hierfür können beispielsweise die Aufnahmen 34 entsprechend unterschiedlich ausgebildet sein.

Genauer gesagt sind die erste Klemmeinheit 18a und die vierte Klemmeinheit 18d dazu ausgebildet, Leiter mit einem Leiterquerschnitt aus einem ersten Leiterquerschnittsbereich von 4 bis 16 mm² aufzunehmen.

Dabei sind die erste Klemmeinheit 18a und die vierte Klemmeinheit 18d in unterschiedlichen Orientierungen an der Potentialausgleichsschiene 16 befestigt, d. h. die Aufnahmen 34 der Klemmeinheiten 18a, 18d zeigen in unterschiedliche Richtungen. Auf diese Weise können die Leiter 28 von verschiedenen Richtungen an der Potentialausgleichsschiene 16 befestigt werden.

In der Ausgestaltung der Figur 3 sind die Richtungen, in die die Aufnahmen 34 der Klemmeinheiten 18a, 18d zeigen entgegengesetzt zueinander.

Die zweite Klemmeinheit 18b ist dazu ausgebildet, Leiter 28 aus einem zweiten Leiterquerschnittsbereich, beispielsweise von 10 bis 18 mm² aufzunehmen, und die dritte Klemmeinheit 18c ist dazu ausgebildet, Leiter 28 mit einem Leiterquerschnitt aus einem dritten Leiterquerschnittsbereich von 0,2 bis 8 mm² aufzunehmen.

In der Ausgestaltung der Figur 3 sind der erste, zweite und dritte Leiterquerschnittsbereich jeweils paarweise unterschiedlich, d.h. sie weisen zumindest einen Bereich auf, der nur in einem der Leiterquerschnittsbereiche abgebildet ist.

Um die Klemmeinheiten 18a bis 18d zu unterscheiden, können die Gehäuse 30 derart ausgebildet sein, dass ein Benutzer des Potentialausgleichssystems 12 sofort erkennt, für welchen Leiterquerschnittsbereiche die entsprechende Klemmeinheit 18 ausgebildet ist.

Hierfür können auf dem Gehäuse 30 der Klemmeinheiten 18 entsprechende Markierungen vorgesehen sein, die den entsprechenden Leiterquerschnittsbereich kennzeichnen. Beispielsweise sind die entsprechenden Leiterquerschnittsbereiche der Klemmeinheiten auf das entsprechende Gehäuse 30 aufgedruckt. Alternativ oder zusätzlich können die Gehäuse 30 auch unterschiedliche Farben aufweisen. Zum Beispiel ist die Farbe der Gehäuse 30 der ersten Klemmeinheit 18a und der vierten Klemmeinheit 18d rot, die Farbe des Gehäuse 30 der zweiten Klemmeinheit 18b blau und die Farbe des Gehäuses 30 der dritten Klemmeinheit 18c grün.

Außerdem weisen die Klemmeinheiten 18 in der Ausgestaltung der Figur 3 auch eine voneinander verschiedene Anzahl an Aufnahmen 34 und entsprechenden Klemmvorrichtungen 36 auf.

Im Allgemeinen können auch die einzelnen Aufnahmen 34 einer Klemmeinheit 18 derart ausgebildet sein, dass zumindest eine der Aufnahmen 34 und die entsprechende Klemmvorrichtung 36 Leiter 28 mit einem Leiterquerschnitt aus dem ersten Leiterquerschnittsbereich und die restlichen Aufnahmen 34 und entsprechenden Klemmvorrichtungen 36 Leiter mit einem Leiterquerschnitt aus dem zweiten oder dritten Leiterquerschnittsbereich aufnehmen kann bzw. können.

Anhand der Figuren 4 bis 6 wird im Folgenden eine beispielhafte Ausführungsform des Potentialausgleichssystems 12 erläutert.

Im Unterschied zur ersten Ausführungsform sind die Klemmeinheiten 18 nicht direkt auf der Potentialausgleichsschiene 16 befestigt, sondern über entsprechende elektrisch leitfähige Montageplatten 50, die lösbar an der Potentialausgleichsschiene 16 befestigt sind.

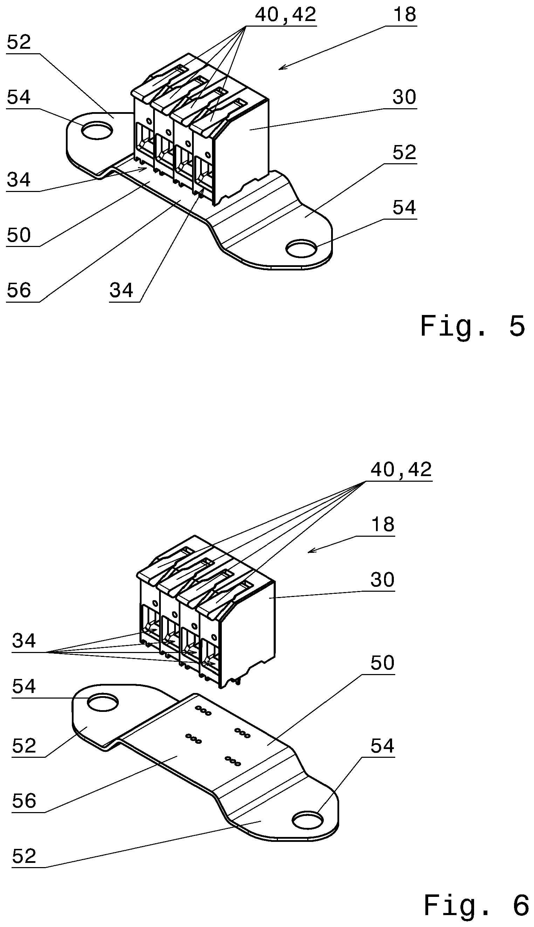

Jede Montageplatte 50 (Figuren 5 und 6) ist bügelförmig ausgebildet und weist endseitig jeweils einen Befestigungsabschnitt 52 auf, der eine an die Befestigungsöffnungen 20 der Potentialausgleichsschiene 16 angepasste Befestigungsöffnung 54 hat.

Im montierten Zustand des Potentialausgleichssystems 12 fluchten demnach die Befestigungsöffnungen 54 der Montageplatte 50 mit den BefestigungsÖffnungen 20 der Potentialausgleichsschiene 16. Dabei ist die Montageplatte 50 im befestigten Zustand (Figur 4) im Bereich der Befestigungsabschnitte 52 durch entsprechende Befestigungsmittel 22, hier Schrauben an der Potentialausgleichsschiene 16 lösbar befestigt.

Über die Befestigungsabschnitte 52 ist die Montageplatte 50 auch gleichzeitig elektrisch leitfähig mit der Potentialausgleichsschiene 16 verbunden.

Zwischen den Befestigungsabschnitten 52 ist auf der Montageplatte 50 ein Aufnahmebereich 56 ausgebildet, in dem die Klemmeinheit 18 auf der Montageplatte 50 unmittelbar befestigt ist (Figur 5).

In der Ausgestaltung der Figur 5 ist die Klemmeinheit 18 an die Montageplatte 50 angelötet. Im Allgemeinen kann die Klemmeinheit 18 auch mit der Montageplatte 50 vernietet sein.

Die Befestigungsabschnitte 52 und der Aufnahmebereich 56 sind jeweils flächig ausgebildet. Dabei liegen die Befestigungsabschnitte 52 in derselben Ebene und der Aufnahmebereich 56 ist versetzt zu der durch die Befestigungsabschnitte 52 definierte Ebene ausgebildet.

Mit anderen Worten ist die Klemmeinheit 18 im befestigten Zustand an der Potentialausgleichsschiene 16 beabstandet zur Potentialausgleichsschiene 16 aufgenommen.

Dabei kann die Montageplatte 50 und damit die Klemmeinheit 18 frei entlang der Potentialausgleichsschiene 16 positioniert werden.

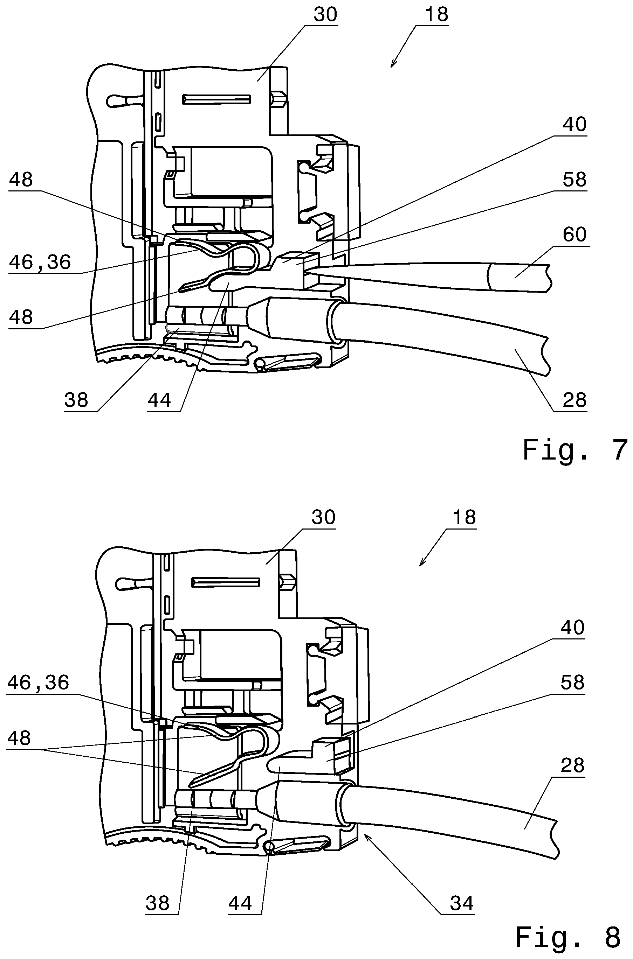

Die Figuren 7 und 8 zeigen eine weitere Ausgestaltung der Klemmeinheit 18. Dabei ist die Klemmvorrichtung 36 in Figur 7 in der Freigabeposition gezeigt und in der Figur 8 in der Klemmposition.

Im Unterschied zur Ausgestaltung der Klemmeinheiten 18 in den Figuren 1 bis 6 ist das Betätigungselement 40 ein Druckknopf 58.

Ein weiterer Unterschied ist, dass die Klemmvorrichtung 36 in die Klemmposition vorgespannt ist. Sobald der Leiter 28 in die Klemmvorrichtung 36 eingesteckt wird, kann der Leiter 28 mit einem Freigabeelement interagieren, welches ein vorgespanntes Klemmteil der Klemmvorrichtung 36 freigibt, wodurch dieses den eingesteckten Leiter 28 mechanisch fixiert bzw. klemmt.

Bei dem Klemmteil kann es sich um den Federarm 48 der Federklemme 46 handeln, insbesondere das freie Ende des Federarms 48.

Das Freigabeelement kann ein Teil sein, welches vom Leiter 28 mechanisch berührt und/oder verschoben wird, sodass dieses das Klemmteil freigibt, beispielsweise ein beweglicher Anschlag, an dem der Leiter 28 anschlägt, wenn er eingesteckt wird. Auch kann das Freigabeelement eine Aufnahmehülse sein, in die das Ende des Leiters 28 eingesteckt wird, wobei die Aufnahmehülse beweglich innerhalb der Klemmvorrichtung 36 ist.

In jedem Fall fixiert die Klemmvorrichtung 36 den Leiter 28 innerhalb der Aufnahme 34 der Klemmeinheit 18 beim Einstecken des Leiters 28 automatisch.

Zum Fixieren des Leiters 28 kann demnach ein Ende des Leiters 28 einfach in die Aufnahme 34 eingesteckt werden.

Die Aufnahme 34 kann ein Einführungselement aufweisen, beispielsweise einen Einführungstrichter, worüber der Leiter 28, insbesondere das eingeführte Ende des Leiters 28, entsprechend geführt ist, beispielsweise in Richtung des Freigabeelements.

In der Ausgestaltung der Figuren 7 und 8 ist die Klemmeinheit 18 demnach als Einsteckklemmeinheit ausgebildet, da der Leiter 28 nur eingesteckt werden muss, um automatisch fixiert und elektrisch angebunden zu werden.

Eine Betätigung des Betätigungselements 40 ist in der Ausgestaltung der Figuren 7 und 8 nur zum Lösen des Leiters 28 aus der Klemmeinheit 18 notwendig, nicht aber zur mechanischen Fixierung des Leiters 28 innerhalb der Klemmeinheit 18.

Zum Lösen des Leiters 28 wird, wie in Figur 7 gezeigt, das Betätigungselement 40 betätigt, beispielsweise mittels eines stabförmigen Werkzeugs 60, wie einem Schraubenzieher.

In diesem Fall beaufschlagt der Betätigungsabschnitt 44 die Klemmvorrichtung 36, insbesondere den Federarm 48, in die Freigabeposition und der Leiter 28 kann aus der Klemmeinheit 18 entnommen werden. Nach dem Rausziehen des Leiters 28 aus der Klemmeinheit 18 kann das Freigabeelement ebenfalls in seine Ausgangsstellung zurückkehren. Insofern kann das Freigabeelement selbst vorgespannt oder mit dem Federarm 48 bzw. dem Klemmteil gekoppelt sein.

In der Ausgangsstellung blockiert das Freigabeelement den Federarm 48, sodass sich dieser in seiner Ausgangsstellung befindet.

Die Ausgangsstellung kann so ausgebildet sein, dass der Federarm 48 gleichzeitig das Betätigungselement 40 in seine in Figur 8 gezeigte Ausgangsstellung zurückdrängt.

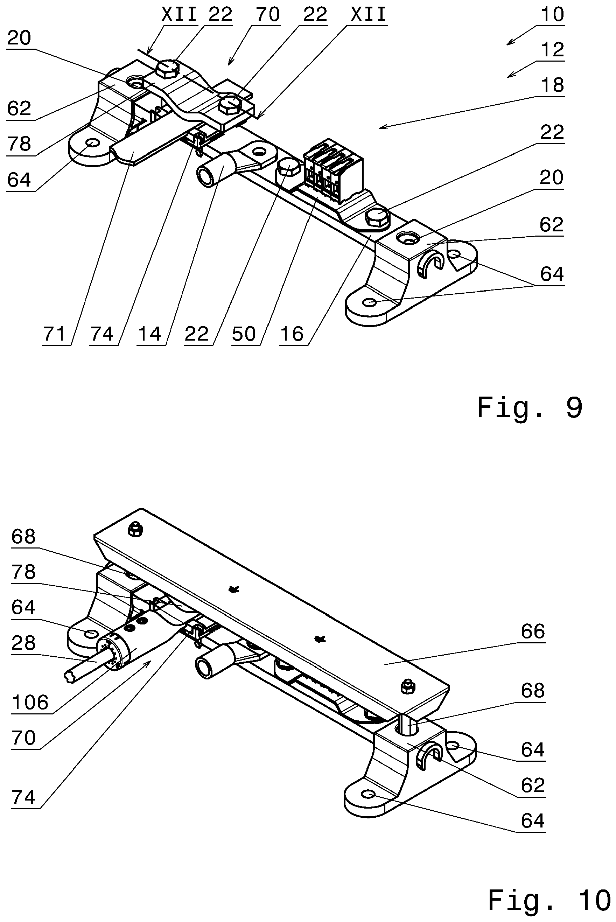

Die Figuren 9 bis 13 zeigen das Baukastensystem 10 in einer weiteren Ausgestaltung. Im Unterschied zu den vorherigen Ausgestaltungen ist an den Enden der Potentialausgleichsschiene 16 jeweils eine elektrisch nicht leitfähige Haltevorrichtung 62 angeordnet, über die das Baukastensystem 10 an einem Gegenstand befestigbar ist, bspw. an einer Wand.

Jede Haltevorrichtung 62 weist hierfür entsprechende Öffnungen 64 auf.

Die Haltevorrichtungen 62 sind zum Beispiel aus Kunststoff.

Außerdem ist oberhalb der Potentialausgleichsschiene 16 eine Abdeckung 66 angeordnet, die durch Distanzelemente 68 an der Potentialausgleichsschiene 16 befestigt und beabstandet aufgenommen ist.

Dabei erstreckt sich die Abdeckung 66 über die gesamte Länge und Breite der Potentialausgleichsschiene und schirmt die an der Potentialausgleichsschiene 16 befestigten Elemente ab, also die Klemmeinheit 18 und die Kabelschuhanschlüsse 14.

Neben der Klemmeinheit 18 und dem Kabelschuhanschluss 14 weist das Baukastensystem 10 auch ein Kontaktsystem 70 auf, über das ein Flachleiter 71 (Figur 9) oder der Rundleiter 28 (Figur 10) an der Potentialausgleichsschiene 16 mechanisch fixiert und elektrisch mit dieser verbunden werden können.

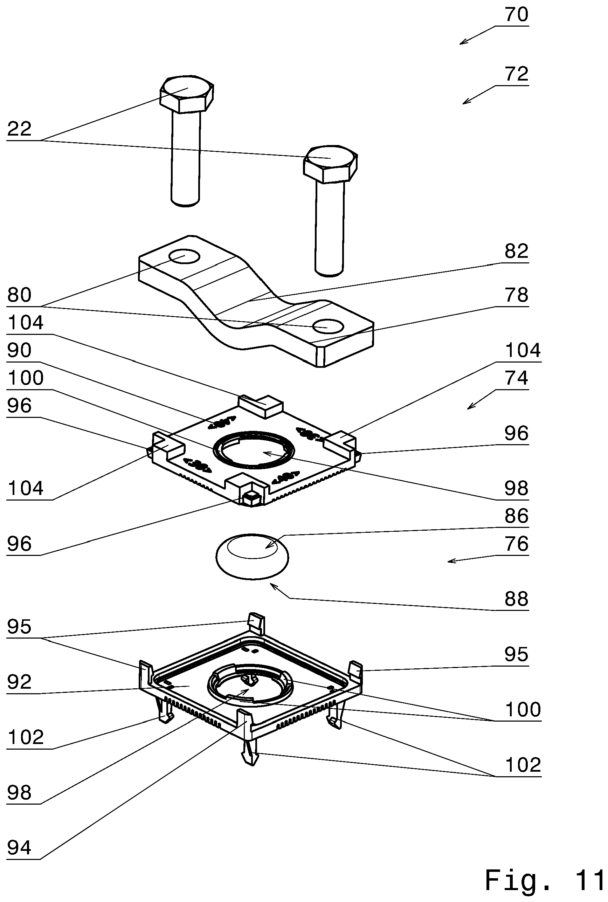

Das Kontaktsystem 70 (Figur 11) weist eine Befestigungsvorrichtung 72, die in den Befestigungsöffnungen 20 der Potentialausgleichsschiene 16 befestigbar ist, ein Gehäuse 74 und einen elektrisch leitfähigen Kontaktkörper 76 auf.

Die Befestigungsvorrichtung 72 umfasst Befestigungsmittel 22 in Form von Schrauben sowie einen Bügel 78, insbesondere einen metallischen, elektrisch leitfähigen Bügel 78.

Alternativ zu den Schrauben können die Befestigungsmittel auch durch Bolzen oder ähnliches ausgebildet sein.

Der Bügel 78 ist im Wesentlichen plattenförmig ausgebildet, d. h. er weist eine geringere Dicke als Ausdehnung in Länge und Breite auf, und hat an zwei entgegensetzten Enden jeweils eine Befestigungsöffnung 80, die an die Befestigungsmittel 22 angepasst ist.

Genauer gesagt weisen die Befestigungsöffnungen 80 des Bügels 78 den gleichen Durchmesser wie die Befestigungsöffnungen 20 der Potentialausgleichsschiene 16 auf, sodass der Bügel 78 mittels der Befestigungsmittel 22 an der Potentialausgleichsschiene 16 befestigt werden kann (Figur 9).

Zwischen den Befestigungsöffnungen 80 ist mittig am Bügel 78 ein Beaufschlagungsbereich 82 ausgebildet.

Genauer gesagt ist der Beaufschlagungsbereich 82 eine Auswölbung des im Wesentlichen plattenförmigen Bügels 78, die sich im befestigten Zustand des Bügels 78 in Richtung der Potentialausgleichsschiene 16 wölbt. Insofern liegt eine am Beaufschlagungsbereich 82 vorgesehene Beaufschlagungsfläche aufgrund der Auswölbung in einer anderen Ebene als die Befestigungsöffnungen 80 des Bügels 78.

Über den derart ausgestalteten Beaufschlagungsbereich 82 kann eine entsprechend gute elektrische Kontaktierung und gleichzeitig mechanische Fixierung des Flachleiters 71 sichergestellt werden.

Der Kontaktkörper 76 ist in der gezeigten Ausführungsform als ein Tonnenkörper ausgebildet, insbesondere als ein Kreistonnenkörper, wobei die Höhe geringer ist als der Durchmesser der Grundfläche.

Genauer gesagt hat der Kontaktkörper 76 eine erste Kontaktseite 86, auf der ein erster flächiger Kontaktbereich ausgebildet ist, beispielsweise in Form einer planen bzw. ebenen Fläche, und eine zweite Kontaktseite 88 mit einem zweiten flächigen Kontaktbereich, beispielsweise in Form einer planen bzw. ebenen Fläche.

Die Kontaktseiten 86, 88 sind entgegengesetzt zueinander am Kontaktkörper 76 vorgesehen.

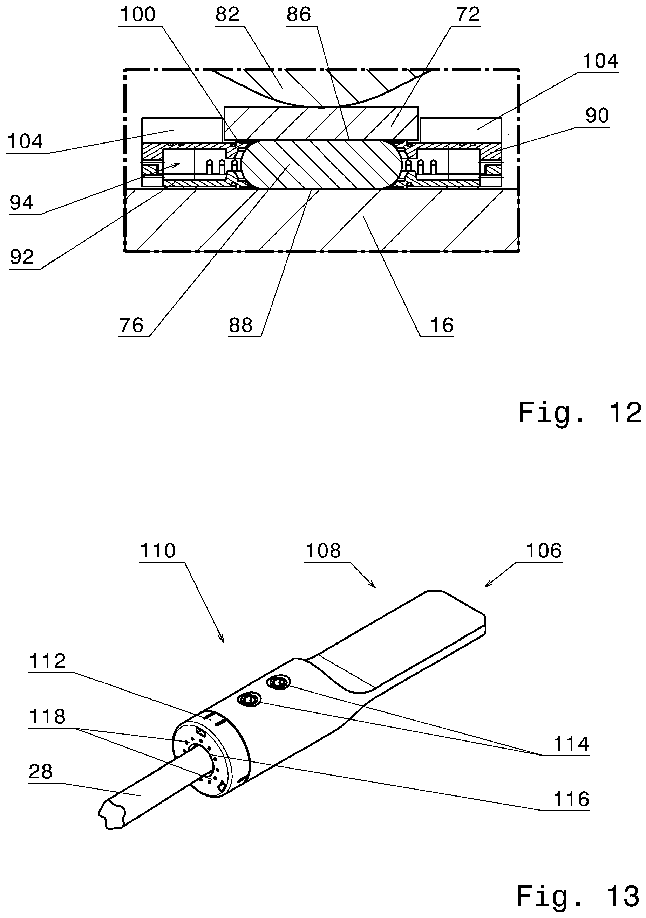

Das Gehäuse 74 ist zweiteilig und besteht aus einem oberen Gehäuseteil 90 und einem unteren Gehäuseteil 92. Dabei ist innerhalb des Gehäuses 74 ein Hohlraum 94 ausgebildet (Figur 12).

Die Gehäuseteile 90, 92 sind lösbar über eine Rastverbindung miteinander verbunden. Am unteren Gehäuseteil 92 sind entsprechend Rasthaken 95 ausgebildet, die an entsprechenden Rastabschnitten 96 am oberen Gehäuseteil 90 angreifen, wodurch die Rastverbindung der beiden Gehäuseteile 90, 92 hergestellt werden kann.

Jedes Gehäuseteil 90, 92 weist eine Kontaktierungsöffnung 98 auf und hat im Bereich der Kontaktierungsöffnungen 98 zudem Haltemittel 100, über die der Kontaktkörper 76 innerhalb des Gehäuses 74 gehalten ist.

Genauer gesagt ist der Kontaktkörper 76 innerhalb des Hohlraums 94 angeordnet und die Haltemittel 100 greifen am Randbereich des Kontaktkörpers 76 an.

Dabei ist der Kontaktkörper 76 innerhalb des Gehäuses 74 derart angeordnet, dass die Kontaktseiten 86, 88 über die Kontaktierungsöffnungen 98 in den Gehäuseteilen 90, 92 zugänglich sind. Insofern kann eine elektrische Kontaktierung erfolgen, auch wenn der Kontaktkörper 76 im Gehäuse 74 aufgenommen ist.

Im befestigten Zustand wird der Flachleiter 71 über die erste Kontaktseite 86 und die Potentialausgleichsschiene 16 über die zweite Kontaktseite 86 elektrisch kontaktiert.

Der Flachleiter 71 ist also über ein Zwischenelement, nämlich den Kontaktkörper, mit der Potentialausgleichsschiene elektrisch leitend verbunden.

Am unteren Gehäuseteil 92 ist darüber hinaus eine durch Rasthaken 102 gebildete Positioniervorrichtung vorgesehen.

Mittels der Positioniervorrichtung kann das Gehäuse 74 mit dem aufgenommenen Kontaktkörper 76 an der Potentialausgleichsschiene 16 positioniert werden.

In der an der Potentialausgleichsschiene 16 positionierten Stellung greifen die Rasthaken 102 an der Kante der Potentialausgleichsschiene 16 an, sodass sich das Gehäuse 74 mit dem aufgenommenen Kontaktkörper 76 noch entlang der Potentialausgleichsschiene 16 bewegen lässt, aber nicht von der Potentialausgleichsschiene 16 entfernt werden kann, ohne die Positioniervorrichtung zu lösen.

Das obere Gehäuseteil 90 hat mehrere Führungselemente 104, die von einer Oberseite des Gehäuses 74 hervorstehen, insbesondere von einer Oberseite des oberen Gehäuseteils 90. Über die Führungselemente 104 wird der Flachleiter 71 in einer bestimmten Position oberhalb des Kontaktkörpers 76 angeordnet und gleichzeitig geführt.

Genauer gesagt wird der Flachleiter 71 durch die Führungselemente 104 mittig oberhalb des Kontaktkörpers 76 positioniert.

In Figur 10 ist über das Kontaktsystem auch ein Rundleiter 28 an der Potentialausgleichsschiene fixiert und elektrisch mit dieser verbunden. Hierfür weist das Kontaktsystem 70 einen Adapter 106 auf (Figur 13).

Der Adapter 106 hat einen Kontaktierungsbereich 108 und eine Aufnahme 110, über die der Rundleiter 28 am Adapter 106 befestigt ist.

Im Kontaktierungsbereich 108 entspricht der Adapter 106 einem Flachleiter 71 und entsprechend ist der Adapter 106 im Kontaktierungsbereich 108 im Querschnitt rechteckig.

Der Adapter 106 wird über den Kontaktierungsbereich 108 am Gehäuse 74 befestigt, wobei der Adapter 106 über den Kontaktierungsbereich 108 und den Kontaktkörper 76 elektrisch leitend mit der Potentialausgleichsschiene 16 verbunden ist.

Die Aufnahme 110 weist eine Aufnahmekammer (nicht gezeigt), in die der Rundleiter 28 eingesteckt ist und eine Abschlusskappe 112 auf. Dabei ist der Rundleiter 28 mittels Fixierungsmittel 114 in der Aufnahmekammer fixiert.

Die Fixierungsmittel 114 ragen in die Aufnahmekammer hinein und drücken senkrecht zur Einsteckrichtung des Rundleiters 28 auf den Rundleiter 28. Auf diese Weise ist der Rundleiter 28 innerhalb des Adapters 106 fixiert. Dabei kontaktiert der Rundleiter 28 die Innenwand der Aufnahmekammer, sodass der Rundleiter 28 elektrisch leitend mit dem Kontaktierungsbereich 108 verbunden ist.

Die Abschlusskappe 112 schließt die Aufnahmekammer endseitig ab und ist lösbar befestigt, beispielsweise über eine entsprechende Rastverbindung oder aufgesteckt.

Die Abschlusskappe 112 weist eine Einstecköffnung 116, durch die der Rundleiter 28 geführt ist, und Belüftungsöffnungen 118 auf.

Die Belüftungsöffnungen 118 sind umfangsmäßig um die Einstecköffnung 116 angeordnet und über die Belüftungsöffnungen 118 kann aufgewärmte Luft nach außen entweichen. Dementsprechend verbessern die Belüftungsöffnungen 118 den Wärmetransport aus der Aufnahmekammer heraus.

Mit dem Kontaktsystem 70 können also sowohl Rundleiter 28 als auch Flachleiter 71 mit der Potentialausgleichsschiene 16 elektrisch verbunden werden.

Auf diese Weise können durch das Baukastensystem 10 viele verschiedene Leiter 28, 71 an der Potentialausgleichsschiene 16 befestigt werden. Durch die Vielzahl an Möglichkeiten kann die Bestückung der Potentialausgleichsschiene 16 sehr einfach an den Einsatzfall angepasst werden.

## Patentansprüche

1. Potentialausgleichssystem für den Schutz gegen elektrische Schläge und zum Funktionspotentialausgleich im Bereich des Blitzschutzes, mit
einer elektrisch leitfähigen Potentialausgleichsschiene (16), und
wenigstens einer auf der Potentialausgleichsschiene (16) angeordneten und elektrisch mit der Potentialausgleichsschiene (16) verbundenen Klemmeinheit (18), die dazu ausgebildet ist, einen Leiter (28) mit der Potentialausgleichsschiene (16) elektrisch zu verbinden,
wobei die Klemmeinheit (18) eine Klemmvorrichtung (36) hat, die zwischen einer Klemmposition und einer Freigabeposition bewegbar ist, wobei der Leiter (28) in der Klemmposition an der Klemmeinheit (18) werkzeugfrei fixierbar und elektrisch mit der Klemmeinheit (18) verbindbar ist, und wobei der Leiter (28) in der Freigabeposition relativ zur Klemmeinheit (18) bewegbar ist,
wobei die Klemmeinheit (18) eine Einsteckklemmeinheit ist und die Klemmvorrichtung (36) in die Klemmposition vorgespannt ist, sodass der Leiter (28) durch Einstecken in die Klemmeinheit (18) mechanisch fixierbar ist,
wobei die Klemmeinheit (18) direkt an der Potentialausgleichsschiene (16) befestigt ist, und
wobei in der Potentialausgleichsschiene (16) mehrere Befestigungsöffnungen (20) zur Befestigung zumindest eines Kabelschuhanschlusses (14) und eines Kontaktsystems (70) für einen Flachleiter (71) oder einen Rundleiter (28) ausgebildet sind, die in Längsrichtung (L) entlang der Potentialausgleichsschiene (16) verteilt sind.

2. Potentialausgleichssystem nach Anspruch 1, **dadurch gekennzeichnet, dass** die Klemmeinheit (18) auf der Potentialausgleichsschiene (16) frei positionierbar ist, wobei die Klemmeinheit (18) über die mehreren Befestigungsöffnungen (20) an der Potentialausgleichsschiene (16) mechanisch fixierbar und elektrisch anbindbar ist.

3. Potentialausgleichssystem nach Anspruch 1, **dadurch gekennzeichnet, dass** die Klemmeinheit (18) auf die Potentialausgleichsschiene (16) aufgesteckt, an der Potentialausgleichsschiene (16) angelötet oder an der Potentialausgleichsschiene (16) angenietet ist.

4. Potentialausgleichssystem nach einem der vorhergehenden Ansprüche, **dadurch gekennzeichnet, dass** die Klemmeinheit (18) ein mehrteiliges Gehäuse (30) umfasst, von dem Kontaktstifte (32) an einer Unterseite hervorragen, die im montierten Zustand der Potentialausgleichsschiene (16) zugeordnet sind.

5. Potentialausgleichssystem nach Anspruch 4, **dadurch gekennzeichnet, dass** die Klemmeinheit (18) über die Kontaktstifte (32) mit der Potentialausgleichsschiene (16) elektrisch leitend verbunden ist.

6. Potentialausgleichssystem nach einem der vorhergehenden Ansprüche, **dadurch gekennzeichnet, dass** die Klemmvorrichtung (36) eine Federklemme (46) aufweist, die in die Klemmposition oder die Freigabeposition vorgespannt ist, wobei die Klemmeinheit (18) ein Betätigungselement (40) hat, über das die Klemmvorrichtung (36) in Richtung der Freigabeposition bzw. der Klemmposition beaufschlagbar ist.

7. Potentialausgleichssystem nach einem der vorhergehenden Ansprüche, **dadurch gekennzeichnet, dass** die Klemmeinheit (18) eine weitere Klemmvorrichtung (36) aufweist, über die ein weiterer Leiter (28) an der Klemmeinheit (18) befestigbar ist.

8. Potentialausgleichssystem nach einem der vorhergehenden Ansprüche, **dadurch gekennzeichnet, dass** das Potentialausgleichssystem zumindest eine weitere Klemmeinheit (18, 18a, 18b) aufweist, wobei eine der wenigstens zwei Klemmeinheiten (18, 18a) dazu ausgebildet ist, einen Leiter (28) mit einem Leiterquerschnitt aus einem ersten Leiterquerschnittsbereich aufzunehmen, und die andere der wenigstens zwei Klemmeinheiten (18, 18b) dazu ausgebildet ist, einen Leiter (28) mit einem Leiterquerschnitt aus einem zweiten Leiterquerschnittsbereich aufzunehmen, wobei der erste Leiterquerschnittsbereich und der zweite Leiterquerschnittsbereich unterschiedlich sind.

9. Potentialausgleichssystem nach einem der vorhergehenden Ansprüche, **dadurch gekennzeichnet, dass** an der Potentialausgleichsschiene (16) endseitig elektrisch nicht leitfähige Haltevorrichtungen (62) angeordnet sind, über die das Potentialausgleichssystem (12) an einem Gegenstand befestigbar ist.

10. Baukastensystem, mit
einem Potentialausgleichssystem (12) nach einem der vorhergehenden Ansprüche, und
zumindest einem Kabelschuhanschluss (14),
wobei wahlweise die Klemmeinheit (18), der zumindest eine Kabelschuhanschluss (14) und/oder das Kontaktsystem (70) an der Potentialausgleichsschiene (16) befestigt sind.

11. Baukastensystem nach Anspruch 10, **dadurch gekennzeichnet, dass** der Abstand benachbarter Befestigungsöffnungen (20) für alle Befestigungsöffnungen (20) gleich ist und/oder dass die Befestigungsöffnungen (20) gleich ausgeführt sind.

## Claims

1. An equipotential bonding system for protection against electric shocks and for functional equipotential bonding in the field of lightning protection, comprising
an electrically conductive equipotential bonding busbar (16), and
at least one clamping unit (18) which is arranged on the equipotential bonding busbar (16) and electrically connected to the equipotential bonding busbar (16) and which is adapted to electrically connect a conductor (28) to the equipotential bonding busbar (16),
wherein the clamping unit (18) has a clamping device (36) which is movable between a clamping position and a release position, wherein in the clamping position the conductor (28) can be fixed in place on the clamping unit (18) without a tool and can be electrically connected to the clamping unit (18), and wherein in the release position the conductor (28) is movable relative to the clamping unit (18),
wherein the clamping unit (18) is a plug-in clamping unit and the clamping device (36) is biased into the clamping position so that the conductor (28) can be mechanically secured by plugging it into the clamping unit (18),
wherein the clamping unit (18) is attached directly to the equipotential bonding bar (16), and
wherein the equipotential bonding bar (16) is formed with a plurality of mounting openings (20) are formed in the equipotential bonding busbar (16) for securing at least one cable lug connection (14) and a contact system (70) for a flat conductor (71) or a round conductor (28), which are distributed in the longitudinal direction (L) along the equipotential bonding busbar (16).

2. The equipotential bonding system according to claim 1, **characterized in that** the clamping unit (18) can be freely positioned on the equipotential bonding busbar (16), wherein the clamping unit (18) can be mechanically fixed in place and electrically connected to the equipotential bonding busbar (16) via the plurality of mounting holes (20).

3. The equipotential bonding system according to claim 1, **characterized in that** the clamping unit (18) is slipped onto the equipotential bonding busbar (16), soldered to the equipotential bonding busbar (16), or riveted to the equipotential bonding busbar (16).

4. The equipotential bonding system according to any one of the preceding claims, **characterized in that** the clamping unit (18) comprises a multi-part housing (30) from which contact pins (32) protrude on a bottom side, which are assigned to the potential equalization busbar (16) when it is installed.

5. The equipotential bonding system according to claim 4, **characterized in that** the clamping unit (18) is electrically conductively connected to the equipotential bonding busbar (16) via the contact pins (32).

6. The equipotential bonding system according to any of the preceding claims, **characterized in that** the clamping device (36) includes a spring terminal (46) which is preloaded to the clamping position or the release position, wherein the clamping unit (18) has an actuating member (40) by means of which the clamping device (36) can be acted upon in the direction of the release position or, respectively, the clamping position.

7. The equipotential bonding system according to any of the preceding claims, **characterized in that** the clamping unit (18) includes a further clamping device (36) by means of which a further conductor (28) can be fastened to the clamping unit (18).

8. The equipotential bonding system according to any of the preceding claims, **characterized in that** the equipotential bonding system includes at least one further clamping unit (18, 18a, 18b), wherein one of the at least two clamping units (18, 18a) is adapted to receive a conductor (28) having a conductor cross-section from a first conductor cross-section range, and the other of the at least two clamping units (18, 18b) is adapted to receive a conductor (28) having a conductor cross-section from a second conductor cross-section range, wherein the first conductor cross-section range and the second conductor cross-section range are different.

9. The equipotential bonding system according to any of the preceding claims, **characterized in that** the equipotential bonding busbar (16) has electrically non-conductive holding devices (62) arranged on its ends, by means of which the equipotential bonding system (12) can be fastened to an object.

10. A modular system, comprising
an equipotential bonding system (12) according to any of the preceding claims, and
at least one cable lug connection (14),
wherein the clamping unit (18), the at least one cable lug connection (14) and/or the contact system (70) are optionally fastened to the equipotential bonding busbar (16).

11. The modular system according to claim 10, **characterized in that** the distance between neighboring fastening openings (20) is the same for all fastening openings (20) and/or **in that** the fastening openings (20) are identical in design.

## Revendications

1. Système d'équilibrage de potentiel pour la protection contre les chocs électriques et pour l'équilibrage du potentiel de fonctionnement dans le domaine de la protection contre la foudre, comprenant
une barre d'équilibrage de potentiel électriquement conductrice (16), et
au moins une unité de serrage (18) disposée sur la barre d'équilibrage de potentiel (16) et reliée électriquement à la barre d'équilibrage de potentiel (16), qui est conçue pour relier électriquement un conducteur (28) à la barre d'équilibrage de potentiel (16),
l'unité de serrage (18) comportant un dispositif de serrage (36) qui peut être déplacé entre une position de serrage et une position de libération, le conducteur (28) pouvant être fixé sans outil à l'unité de serrage (18) dans la position de serrage et pouvant être relié électriquement à l'unité de serrage (18), et le conducteur (28) pouvant être déplacé par rapport à l'unité de serrage (18) dans la position de libération,
l'unité de serrage (18) étant une unité de serrage à enfichage et le dispositif de serrage (36) étant précontraint en position de serrage, de sorte que le conducteur (28) peut être fixé mécaniquement par enfichage dans l'unité de serrage (18),
l'unité de serrage (18) étant fixée directement à la barre d'équilibrage de potentiel (16), et
la barre d'équilibrage de potentiel (16) comportant plusieurs ouvertures de fixation (20) sont formés dans la barre d'équilibrage de potentiel (16) pour la fixation d'au moins une cosse de câble (14) et d'un système de contact (70) pour un conducteur plat (71) ou un conducteur rond (28), lesquels sont répartis dans la direction longitudinale (L) le long de la barre d'équilibrage de potentiel (16).

2. Système d'équilibrage de potentiel selon la revendication 1, **caractérisé en ce que** l'unité de serrage (18) peut être positionnée librement sur la barre d'équilibrage de potentiel (16), l'unité de serrage (18) pouvant être fixée mécaniquement et reliée électriquement à la barre d'équilibrage de potentiel (16) par l'intermédiaire des multiples orifices de fixation (20).

3. Système d'équilibrage de potentiel selon la revendication 1, **caractérisé en ce que** l'unité de serrage (18) est emboîtée sur le rail de liaison équipotentielle (16), soudée au rail de liaison équipotentielle (16) ou rivetée au rail de liaison équipotentielle (16).

4. Système d'équilibrage de potentiel selon l'une des revendications précédentes, **caractérisé en ce que** l'unité de serrage (18) comprend un boîtier en plusieurs parties (30) dont la face inférieure comporte des broches de contact (32) qui, à l'état monté, sont associées au rail de liaison équipotentielle (16).

5. Système d'équilibrage de potentiel selon la revendication 4, **caractérisé en ce que** l'unité de serrage (18) est reliée de manière électriquement conductrice à la barre d'équilibrage de potentiel (16) par l'intermédiaire des broches de contact (32).

6. Système d'équilibrage de potentiel selon l'une des revendications précédentes, **caractérisé en ce que** le dispositif de serrage (36) comporte une pince à ressort (46) qui est précontrainte dans la position de serrage ou dans la position de libération, l'unité de serrage (18) comportant un élément d'actionnement (40) qui permet d'actionner le dispositif de serrage (36) dans le sens de la position de libération ou de la position de serrage.

7. Système d'équilibrage de potentiel selon l'une des revendications précédentes, **caractérisé en ce que** l'unité de serrage (18) comporte un autre dispositif de serrage (36) par l'intermédiaire duquel un autre conducteur (28) peut être fixé à l'unité de serrage (18).

8. Système d'équilibrage de potentiel selon l'une des revendications précédentes, **caractérisé en ce que** le système d'équilibrage de potentiel comprend au moins une autre unité de serrage (18, 18a, 18b), l'une des au moins deux unités de serrage (18, 18a) étant conçue pour recevoir un conducteur (28) ayant une section de conducteur comprise dans une première plage de sections de conducteur, et l'autre des au moins deux unités de serrage (18, 18b) est conçue pour recevoir un conducteur (28) ayant une section de conducteur comprise dans une deuxième plage de sections de conducteur, la première plage de sections de conducteur et la deuxième plage de sections de conducteur étant différentes.

9. Système d'équilibrage de potentiel selon l'une des revendications précédentes, **caractérisé en ce que** des dispositifs de fixation (62) électriquement non conducteurs sont disposés à l'extrémité de la barre d'équilibrage de potentiel (16), grâce auxquels le système d'équilibrage de potentiel (12) peut être fixé à un objet.

10. Système modulaire, comprenant
un système d'équilibrage de potentiel (12) selon l'une des revendications précédentes, et
au moins un raccordement à cosse (14),
l'unité de serrage (18), le au moins un raccord de cosse (14) et/ou le système de contact (70) étant fixés au choix sur la barre d'équilibrage de potentiel (16).

11. Système modulaire selon la revendication 10, **caractérisé en ce que** la distance entre les ouvertures de fixation adjacentes (20) est la même pour toutes les ouvertures de fixation (20) et/ou **en ce que** les ouvertures de fixation (20) sont de conception identique.
